# EUROPEAN PATENT SPECIFICATION

(11) **EP 0 742 055 B1**
(45) Date of publication and mention of the grant of the patent: **09.12.1998**
(21) Application number: 96830272.9
(22) Date of filing: 09.05.1996
(51) Int. Cl.: B21D 5/04

(54) **A sheet-metal bending, profiling and cutting machine**
Blechbiege-, Profilierungs- und Scheidemaschine
Machine à plier, à profiler et à couper de la tôle

(30) Priority: 11.05.1995 IT VR950041
(43) Date of publication of application: 13.11.1996
(73) Proprietor: SAMAT S.r.l., I-37044 Cologna Veneta (Verona) (IT)
(72) Inventor: Lillbacka, Jorma Juhani, Alaharma (FI); De Rossi, Roberto, 37044 Cologna Veneta, (Verona) (IT); Patuzzi, Luigi, 37032 Monteforte d'Alpone, (Verona) (IT)
(74) Representative: Botti, Mario

(56) References cited:
- EP-A- 0 490 828
- CH-A- 508 425
- DE-A- 4 235 629

## Description

The present invention relates to a sheet-metal bending, profiling and cutting machine.

In particular the machine is best applied in the bending, profiling and cutting of metal sheets of different thicknesses, of satin-finish stainless steel, pre-painted sheets, or plasticated sheets and so on, which are destined for widely different uses, such as, for example, the construction of metallic furniture, the cases of household electrical appliances, shelves etc., in which the bending, profiling and cutting area of the sheet must be without defects and alterations of the paint or protective layers .

Instead there are machines capable of carrying out only one of these operations at a time, but they have known limitations and disadvantages.

### a) Traditional bending machines.

Basically these machines are set up in the following way:
they include a fixed supporting structure bearing two pressing elements, one fixed lower element, on which the sheet to be bent is rested, and one mobile upper element which keeps the sheet pressed on the lower pressing element. Coupled to the fixed supporting structure is a mobile structure having a substantially C-shaped transversal section which bears two blades, one upper blade and one lower blade, which, after the raising or the lowering of the mobile structure, carry out the bending of the sheet.

To avoid the arising of defects in the bending area and in order to be able to carry out bendings with different angles as well as roundings of said bending angles, a movement of the mobile frame is envisaged, both away from and towards the sheet to be bent.

One of these machines is described in the European patent Nr. 490.828.

These machines, though, have operating limits determined by the contact area between the two pressing elements which hold the sheet during the bending. This prevents the width of the sheet to be bent from being smaller than the width of the contact area of the pressing elements.

Consequently, sheets with bent borders are always obtained, though having a wide flat surface not always desired.

Therefore, it is necessary to carry out the cutting of the sheet on another machine, this causing a great loss of time to the detriment of production.

Once the sheet has been cut it can still be returned onto the bending machine, which carries out the bending of the border already cut, and produce, for example, a second profile which is identical to the first.

After this operation has been completed there will always be waste material which is almost the same as the area of the sheet which is held by the pressing elements.

Another drawback (relative to the use of traditional bending machines and guillotine sheet shears) is due to the fact that at the moment in which the operator wishes to carry out the bending followed by the cutting of a very thin sheet, he could run a serious risk, since he has to carry out the operation with his hands coming into very close contact with the bending and cutting tools.

A further operating limitation in traditional bending machines is due to the frequent impossibility in completing all of the bending operations, as the overall dimensions of the pressing elements do not permit the bending blades to carry out bends which are very close to each other and with relatively small angles or however to produce closed bends.

In order to carry out these proceedings it would be necessary to transfer the sheet from a bending machine onto a profiling machine with obvious waste of time and money.

Alternatively it is possible to send the sheet directly into a profiling machine.

### b) The traditional profiling machines.

As is known, said machines use a technology which does not make them easy to handle from an operating point of view.

These machines are essentially constituted by a fixed bench, a few meters long, bearing a number of vertical columns bearing in turn various motorized profiling rollers which pull and bend the transiting sheet in line with them.

In order to modify the bending profile it is necessary to replace the motorized rollers but this operation, due to the complexity of the machine, is long and complicated.

From DE-A-4235629 a machine is known for bending, profiling and cutting metal sheets, the machine comprising a fixed supporting structure bearing a lower pressing element, on which the sheet can be rested, to which is coupled an upper mobile element by means of which the sheet can be maintained pressed against the plane defined by the lower pressing element, the machine further comprising a mobile structure for bending a sheet and at least one toolholder unit capable of moving in longitudinal direction of the pressing elements, the tools of the toolholder unit being adapted for profiling and/or cutting of the sheet while held in position by the pressing elements.

The principal aim of the present invention is that of providing a machine capable of carrying out itself the sheet bending, profiling and/or cutting operations with a very high production rate, operating accuracy and accident prevention on behalf of the operators.

A further aim of the present invention is to provide a sheet-metal bending, profiling and cutting machine which is relatively easy to construct and to be operated.

These and further aims are all achieved by the machine as defined in claim 1.

Preferred embodiments are defined by the dependent claims.

Further characteristics and advantages of the present invention will better emerge from the detailed description that follows made with reference to the accompanying drawings which represent a preferred embodiment in the form of a non-limiting example wherein:

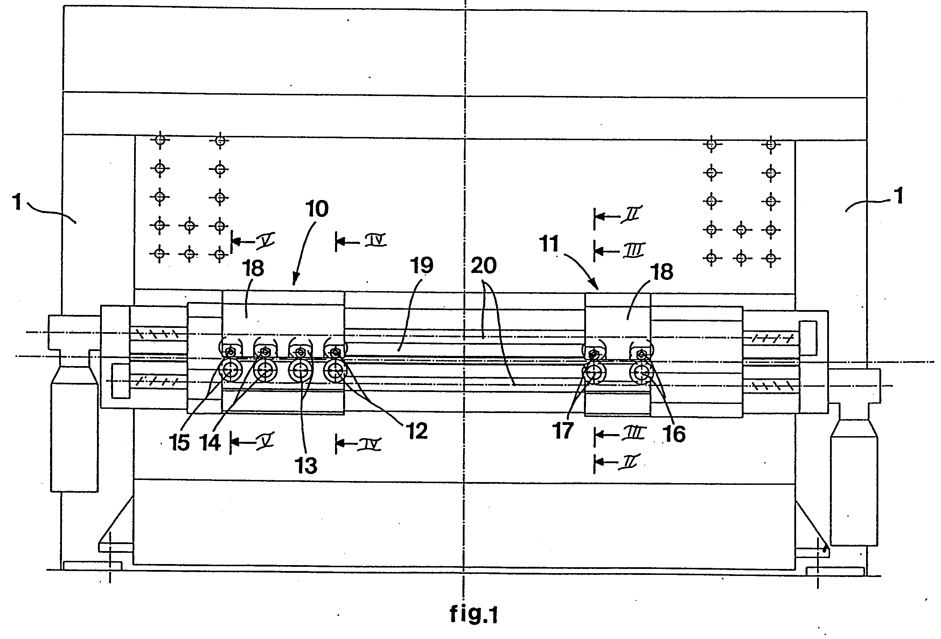

- figure 1 shows a schematical front view of the machine object of the present invention, with several parts removed so as to better evidence others;

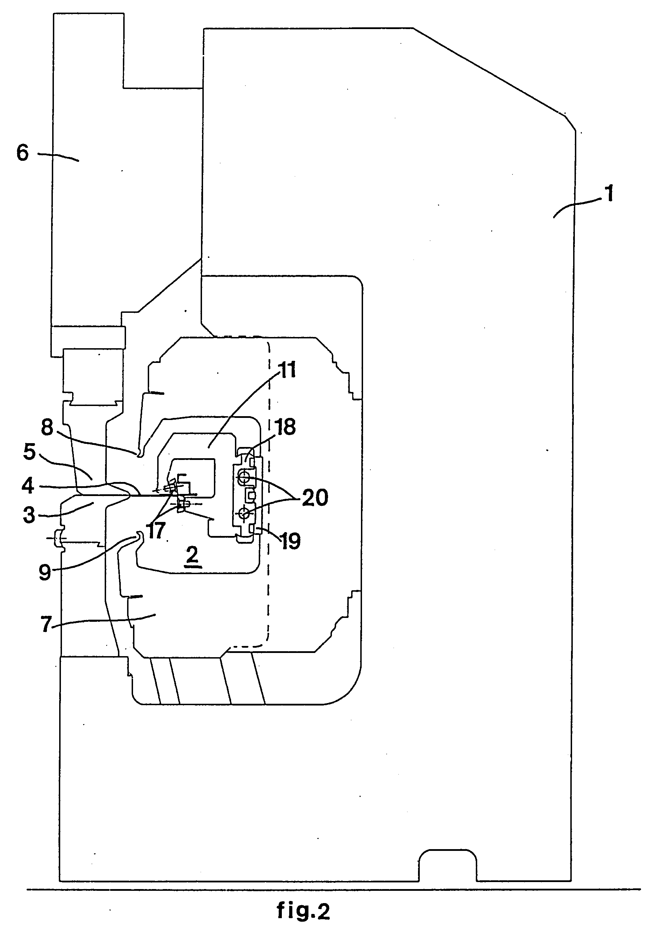

- figure 2 shows a schematical section view of the machine object of the present invention, taken along the section line II-II of figure 1;
- figure 3 shows a partial section view of the machine, taken along the section line III-III of figure 1;
- figures 4 and 5 show a partial section view of the machine, with a first example of embodiment of profiling tools, taken along the sections IV-IV and V-V of figure 1.

With reference to the figures, 1 denotes a fixed supporting structure delimiting a channel 2 inside said structure. The structure 1 bears a lower pressing element 3, on which the sheet 4 to be bent is rested, to which structure is coupled an upper mobile pressing element 5 which presses the sheet 4 against the lower pressing element 3.

The upper pressing element 5 is borne by a structure 6, connected to the supporting structure 1, which is capable of carrying out movements on the vertical plane.

Within the channel 2 is housed a mobile structure 7 having a substantially C-shaped transversal section which bears an upper blade 8 and a lower blade 9.

The blades 8 and 9 carry out the sheet 4 bending when the structure 7 is raised or lowered. In these cases, the blade 8 or the blade 9 interferes with the sheet 4, close to the area where said sheet projects from elements 3 and 5, by bending it: the upper blade 8 will carry out the bending downwards, while the lower blade 9 will carry out the bending upwards.

The raising and the lowering of the mobile structure 7 is carried out by suitable means, not shown because they are of a known type. Said structure is also capable of translating horizontally from and towards the sheet 4 by means of a particular activation system which is described, for example, in the above mentioned European patent number 490.828. Inside the channel 2 are removably housed two toolholder units 10 and 11 which are capable of moving straight-line along the longitudinal development of the channel 2. In the case illustrating the embodiment in the appended drawings, there are two toolholder units 10 and 11 (this number can differ though) and the tools are constituted by four (triads of) bending tools 12, 13,14,15 and two (couples of) cutting tools 16 and 17, but also in this case the tools can be any number.

All of these tools carry out the working of the sheet while it is held in position by the two pressing elements 3 and 5.

Each of the two toolholder units 10 and 11 are mounted onto a motorised carriage 18 which is mounted in turn onto sliding guides 19, fixed on the inside of the structure 7, which carriage 18 is activated by means of motorised threaded bars 20.

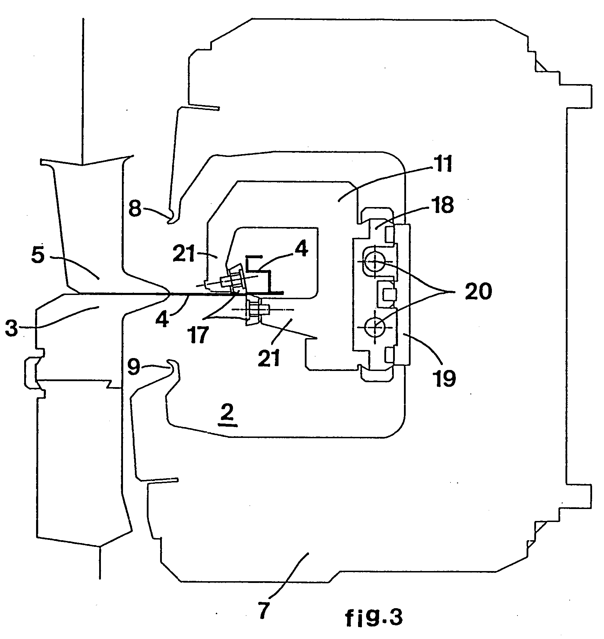

Each of the toolholder units 10 or 11 is constituted by a shaped element, having a development which is mostly longitudinal, showing a C-shaped transversal section where the branches 21 of said C shape appear close to each other and are positioned respectively one opposite the other with respect to the sheet 4. These branches 21 bear the tools 12-17, as shown in the figures 3, 4 and 5. With reference to figure 3, showing the toolholder units 11, the tools 16 and 17 borne by the branches 21 are constituted by roller shears having opposed cutting edges and positioned respectively one opposite the other with respect to the lying plane of the sheet 4 and in 25 contact with said plane. It should be noted that, in the case shown in figure 3, the roller shears 16 and 17 show rotation axes which are not parallel between each other.

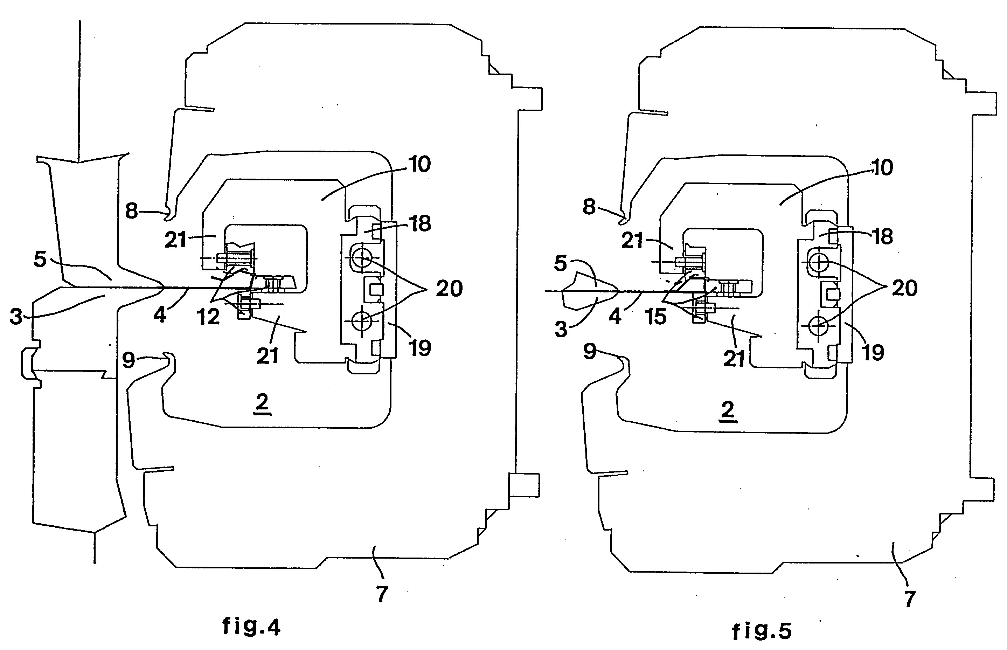

With reference to figures 4 and 5, showing the toolholder unit 10, the tools 12, 13, 14 and 15 borne by the branches 21 are constituted by idle profiling rollers having work surfaces which are in contact with the sheet 4. The profile of said work surfaces varies depending on the first profiling roller 12 to the last profiling roller 15, both belonging to the same unit 10 with a modest discontinuity in such a way that the profiling of the sheet 4 comes about gradually.

In the example shown in figures 4 and 5, the axes of the profiling rollers 12-15 belonging to a same branch 21 (the branch shown on the right in the figures) show inclinations different from one another with reference to the plane in which the sheet 4 is supported.

Likewise, there can be profiling rollers 12-15 belonging to the a same branch 21 (for example the one on the left in the figures 4 and 5) which show axes being parallel between each other.

It should be noted, though, that said axes could also not be parallel: in this case the rollers 12-15 (on the left in the figures 4 and 5) would carry out a gradual profiling of the sheet.

Obviously, a numerous amount of combinations of rollers as well as variations in the relative positions of said rollers are possible, in such a way that any kind of profile can be formed on the sheet 4.

It should also be noted that, from a construction and operating point of view, the machine object of the present invention is very simple and therefore offers economic and operating advantages.

## Claims

1. A sheet-metal bending, profiling and cutting machine comprising a fixed supporting structure bearing a lower pressing element (3), on which the sheet (4) can be rested, to which is coupled an upper mobile element (5) by means of which the sheet (4) can be maintained pressed against a plane defined by the lower pressing element (3), said machine also comprising a mobile structure (7) having a substantially C-shaped transversal section which defines a channel (2) with a longitudinal development, said C structure (7) bearing one pair of bending blades (8, 9) adapted to carry out the bending of the sheet (4) when the C structure (7) is raised and lowered or moved forwards or backwards with respect to the sheet, wherein at least one toolholder unit (10, 11) is provided which is removably housed inside said channel (2) and capable of moving along the longitudinal development of said channel (2), the tools (12-17) of the toolholder unit (10, 11) being suitable for profiling and/or cutting of the sheet (4) while held in position by said lower and upper pressing elements (3, 5).

2. A machine as claimed in claim 1, characterised in that said toolholder unit (10, 11) is mounted onto a motorised carriage (18) capable of moving along said longitudinal direction inside said channel (2), which is parallel with the support plane of the sheet (4).

3. A machine as claimed in claim 2, characterised in that the tools of said toolholder unit (11) are cutting tools (16, 17) which, as a consequence of said carriage motion, carry out the sheet cutting.

4. A machine as claimed in claim 2, characterised in that the tools of said toolholder unit (10) are profiling tools (12-15) which, as a consequence of said carriage motion, carry out the sheet profiling.

5. A machine as claimed in claim 2, characterised in that at least one of said toolholder units (10, 11) is equipped with cutting tools (16, 17) and at least another one of said toolholder units is equipped with profiling tools (12-15).

6. A machine as claimed in claim 2, characterised in that the tools of said toolholder unit and of at least another one of said toolholder unit are all profiling tools (12-15).

7. A machine as claimed in claim 2, characterised in that said toolholder unit (10, 11), mounted on said motorised carriage (18) and capable of moving in said longitudinal direction inside said channel (2) parallel with the support plane of the sheet (4), is constituted by an essentially longitudinally extending element having a substantially C-shaped transversal section where the branches (21) of said C shape extend into proximity with each other and are positioned respectively one opposite the other with respect to said support plane of the sheet, said branches (21) bearing said tools (12-17).

8. A machine as claimed in claim 7, characterised in that the tools borne by said branches (21) are constituted by roller shears (16, 17) having opposed cutting edges and positioned respectively one opposite the other with respect to said support plane of the sheet and in contact with it.

9. A machine as claimed in claim 8, characterised in that said roller shears (16, 17) have rotation axes which are parallel between each other.

10. A machine as claimed in claim 7, characterised in that the tools borne by said branches (21) are constituted by idle profiling rollers (12-15) having work surfaces in contact with the sheet, the profile of which varies gradually from the first profiling roller to the last profiling roller of one and the same toolholder unit (10), so as to carry out the profiling of the sheet gradually.

11. A machine as claimed in claim 10, characterised in that the axes of the profiling rollers (12-15) borne by one and the same branch have all the same inclination with respect to said support plane of the sheet but a gradually differing profile of the work surfaces.

12. A machine as claimed in claim 10, characterised in the axes of the profiling rollers (12-15) borne by the same branch (21) having different inclinations with reference to said support plane of the sheet.

13. A machine as claimed in claim 2, characterised in that said carriage (18) is mounted on sliding guides (19) which are fixed onto one of the internal walls of said channel (2) and is activated by means of motorised threaded bars (20).

## Patentansprüche

1. Metallblech-Biege-, Profilier- und Schneidmaschine mit einer feststehenden Halterungskonstruktion, die ein unteres Pressenelement (3) trägt, auf das das Blech (4) aufgelegt werden kann, und mit dem ein oberes bewegliches Element (5) gekoppelt ist, durch das das Blech (4) gegen eine Ebene gedrückt gehalten werden kann, die durch das untere Pressenelement (3) definiert ist, wobei die Maschine ferner eine bewegliche Konstruktion (7) mit im wesentlichen C-förmigem Querschnitt aufweist, die einen Kanal (2) mit einer Längserstreckung definiert, wobei die C-förmige Konstruktion (7) ein Paar Biegeblätter (8, 9) trägt, die zum Ausführen des Biegens des Blechs (4) ausgebildet sind, wenn die C-förmige Konstruktion (8) in bezug auf das Blech angehoben und abgesenkt oder nach vorne oder zurück bewegt wird,
wobei wenigstens eine Werkzeughaltereinheit (10, 11) vorhanden ist, die in dem Kanal (2) in lösbarer Weise untergebracht ist und in der Lage ist, sich entlang der Längserstreckung des Kanals (2) zu bewegen, wobei die Werkzeuge (12-17) der Werkzeughaltereinheit (10, 11) zum Profilieren und/oder Schneiden des Blechs (4) geeignet sind, während dieses durch das obere und das untere Pressenelement (3, 5) in Position gehalten wird.

2. Maschine nach Anspruch 1,
dadurch gekennzeichnet, daß die Werkzeughaltereinheit (10, 11) an einem motorisierten Schlitten (18) angebracht ist, der in der Lage ist, sich entlang der Längsrichtung im Inneren des Kanals (2) zu bewegen, der parallel zu der Halterungsebene des Blechs (4) ist.

3. Maschine nach Anspruch 2,
dadurch gekennzeichnet, daß die Werkzeuge der Werkzeughaltereinheit (11) Schneidwerkzeuge (16, 17) sind, die als Ergebnis der Schlittenbewegung das Schneiden des Blechs ausführen.

4. Maschine nach Anspruch 2,
dadurch gekennzeichnet, daß die Werkzeuge der Werkzeughaltereinheit (10) Profilierwerkzeuge (12-15) sind, die als Ergebnis der Schlittenbewegung das Profilieren des Blechs ausführen.

5. Maschine nach Anspruch 2,
dadurch gekennzeichnet, daß wenigstens eine der Werkzeughaltereinheiten (10, 11) mit Schneidwerkzeugen (16, 17) ausgestattet ist und wenigstens eine weitere der Werkzeughaltereinheiten mit Profilierwerkzeugen (12-15) ausgestattet ist.

6. Maschine nach Anspruch 2,
dadurch gekennzeichnet, daß die Werkzeuge der Werkzeughaltereinheit und wenigstens einer weiteren Werkzeughaltereinheit allesamt Profilierwerkzeuge (12-15) sind.

7. Maschine nach Anspruch 2,
dadurch gekennzeichnet, daß die Werkzeughaltereinheit (10, 11), die an dem motorisierten Schlitten (18) angebracht ist und zur Ausführung einer Bewegung in Längsrichtung im Inneren des Kanals (12) parallel zu der Halterungsebene des Blechs (4) in der Lage ist, durch ein sich im wesentlichen in Längsrichtung erstreckendes Element gebildet ist, das einen im wesentlichen C-förmigen Querschnitt aufweist, wobei sich die Arme (21) der C-Form nahe zueinander hin erstrecken und einander in bezug auf die Halterungsebene des Blechs gegenüberliegend angeordnet sind, wobei die Arme (21) die Werkzeuge (12-17) tragen.

8. Maschine nach Anspruch 7,
dadurch gekennzeichnet, daß die von den Armen (21) getragenen Werkzeuge durch Rollenscheren (16, 17) gebildet sind, die einander gegenüberliegende Schneidkanten aufweisen und einander in bezug auf die Halterungsebene des Blechs gegenüberliegend sowie in Berührung mit dem Blech angeordnet sind.

9. Maschine nach Anspruch 8,
dadurch gekennzeichnet, daß die Rollenscheren (16, 17) Rotationsachsen aufweisen, die zueinander parallel sind.

10. Maschine nach Anspruch 7,
dadurch gekennzeichnet, daß die von den Armen (21) getragenen Werkzeuge durch antriebslose Profilierrollen (12-15) gebildet sind, die mit dem Blech in Berührung stehende Arbeitsflächen aufweisen und deren Profil sich von der ersten Profilierrolle bis zu der letzten Profilierrolle ein und derselben Werkzeughaltereinheit (10) allmählich ändert, so daß die Profilierung des Blechs in allmählicher Weise durchgeführt wird.

11. Maschine nach Anspruch 10,
dadurch gekennzeichnet, daß die Achsen der von ein und demselben Arm (21) getragenen Profilierrollen (12-15) alle dieselbe Neigung in bezug auf die Halterungsebene des Blechs, jedoch ein sich allmählich änderndes Profil der Arbeitsflächen aufweisen.

12. Maschine nach Anspruch 10,
dadurch gekennzeichnet, daß die Achsen der von ein und demselben Arm (21) getragenen Profilierrollen (12-15) unterschiedliche Neigungen in bezug auf die Halterungsachse des Blechs aufweisen.

13. Maschine nach Anspruch 2,
dadurch gekennzeichnet, daß der Schlitten (18) auf Gleitführungen (19) angebracht ist, die an einer der Innenwände des Kanals (2) angebracht sind, sowie mittels motorisierter Gewindestangen (20) aktiviert wird.

## Revendications

1. Machine à cintrer, à profiler et à découper des tôles métalliques comprenant une structure fixe de support soutenant un élément inférieur presseur (3), sur lequel la tôle (4) est en appui, et auquel est associé un élément supérieur mobile (5) qui maintient la tôle (4) pressée sur un plan horizontal contre l'élément inférieur presseur (3), ladite machine comprenant également une structure mobile (7) ayant une section transversale sensiblement en forme de C qui définit une chambre (2) ayant une étendue longitudinale, ladite structure en C (7) portant une paire de lames (8, 9) de cintrage qui exécutent le cintrage de la tôle (4) lorsque cette structure en C (8) est levée et abaissée ou bien déplacée vers l'avant ou vers l'arrière par rapport à la tôle, caractérisée en ce qu'au moins une unité porte-outil (10, 11) est logée, de manière amovible, à l'intérieur de ladite chambre (2), pour se déplacer suivant l'étendue longitudinale de ladite chambre (2), lesquels outils (12, 17) sont envisagés pour l'exécution d'opérations de profilane et/ou de découpage de la tôle (4) maintenue en position par lesdits éléments presseurs inférieur et supérieur (3, 5).

2. Machine selon la revendication 1, caractérisée en ce que ladite unité porte-outil (10, 11) est montée sur un chariot (18) motorisé qui se déplace dans ladite direction longitudinale à l'intérieur de ladite chambre (2), qui est parallèle audit plan horizontal de la tôle (4).

3. Machine selon la revendicauion 2, caracrérisée en ce que les outils de ladite unite porte-outil (11) sont des outils de coupe (16-17) qui, du fait de déplacement dudit chariot, procèdent au découpage de la tôle.

4. Machine selon la revendication 2, caractérisée en ce que les outils de ladite unité porte-outil (11) sont des outils de profilane (12-15) qui, du fait de déplacement dudit chariot, exécutent le profilane de la tôle.

5. Machine selon la revendication 2, caractérisée en ce qu'au moins l'une desdites unités porte-outils est équipée d'outils de coupe (16-17) et en ce qu'au moins une autre desdites unités porte-outils (10, 11) est équipée d'outils de cintrage (12-15).

6. Machine selon la revendication 2, caractérisée en ce que les outils de ladite unité porte-outil et d'au moins une autre desdites unités porte-outils sont tous des outils de profilage (12-15).

7. Machine selon la revendication 2, caractérisée en ce que ladite unité porte-outil (10, 11), montée sur ledit chariot (18) motorisé et propre à se déplacer dans ladite direction longitudinale à l'intérieur de ladite chambre (2) parallèlement audit plan horizontal de la tôle (4), est constituée par un élément avec une étendue principalement longitudinale ayant une section transversale sensiblement en forme de C, dans laquelle les branches (21) de la forme en C sont proches l'une de l'autre et sont placées, respectivement l'une en face de l'autre par rapport audit plan horizontal de la tôle, lesdites branches (21) portant lesdits outils.

8. Machine selon la revendication 7, caractérisée en ce que les outils, portés par lesdites branches (21), sont constitués par des cisailles à galets (16, 17) ayant des bords coupants opposés et placés respectivement l'un en tace de l'autre par rapporr audit plan horizontal de la tôle et en contact avec elle.

9. Machine selon la revendication 8, caractérisée en ce que lesdites cisailles à galets (16, 17) ont des axes de rotation qui sont parallèles l'un à l'autre.

10. Machine selon la revendication 7, caractérisée en ce que les outils, portés par lesdites branches (21), sont constitués par des galets de profilage (12-15) libres ayant des surfaces de travail en contact avec la tôle, leur profil variant progressivement à partir du premier galet de profilage jusqu'au dernier galet de profilane, appartenant ensemble à la même unité porte-outil (10), de manière à exécuter progressivement le profilage de la tôle.

11. Machine selon la revendication 10, caractérisée en ce que les axes des galets de profilage (12-15), portés par la même branche (21), ont tous la m&me inclinaison par rapport audit plan horizontal de la tôle mais présentent un profil des surfaces de travail qui varie progressivement.

12. Machine selon la revendication 10, caractérisée en ce que les axes des galets de profilage (12-15), portés par la même branche (21), ont des inclinaisons mutuellement différentes, par rapport audit plan horizontal de la tôle.

13. Machine selon la revendication 2, caractérisée en ce que ledit chariot (19) est monté sur des glissières de guidage qui sont fixées sur l'une des parois internes de ladite chambre (2) et en ce qu'il est actionné au moyen de tiges filetées motorisées (20).
